Europäisches Patentamt

European Patent Office

Office européen des brevets

(19)

(11) **EP 0 664 076 B1**

(12) **EUROPÄISCHE PATENTSCHRIFT**

(45) Veröffentlichungstag und Bekanntmachung des Hinweises auf die Patenterteilung:
**11.12.1996 Patentblatt 1996/50**

(51) Int. Cl.$^6$: **A01D 34/86**

(21) Anmeldenummer: **95100868.9**

(22) Anmeldetag: **23.01.1995**

(54) **Ausleger-Arbeitsgerät, insbesondere Ausleger-Mähgerät mit reichweiten-unabhängiger Stelleinrichtung für den Auflagedruck auf dem bearbeiteten Gelände**

Boom mounted treatment apparatus, especially mowing apparatus with ground support-pressure controlling device

Appareil de traitement en particulier de fauchage à bras porteur à dispositif d'asservissement de la pression d'appui au sol

(84) Benannte Vertragsstaaten:
**AT CH DE FR LI**

(30) Priorität: **21.01.1994 DE 4401716**

(43) Veröffentlichungstag der Anmeldung:
**26.07.1995 Patentblatt 1995/30**

(73) Patentinhaber: **MULAG- FAHRZEUGWERK H. WÖSSNER GMBH & CO. KG**
**D-7605 Bad Peterstal-Griesbach 1 (DE)**

(72) Erfinder:
• **Wössner, Werner Dipl.-Ing.**
**D-77740 Bad Peterstal (DE)**

• **Müller, Alfred**
**D-77728 Oppenau-Löcherberg (DE)**

(74) Vertreter: **Hansmann, Axel, Dipl.-Wirtsch.-Ing. et al**
**Patent- und Rechtsanwälte**
**Hansmann, Vogeser, Dr. Boecker, Alber, Dr. Strych, Liedl**
**Albert-Rosshaupter-Strasse 65**
**81369 München (DE)**

(56) Entgegenhaltungen:
WO-A-92/11750     DE-A- 3 206 757
FR-A- 2 642 797     GB-A- 1 156 452
GB-A- 2 129 265     GB-A- 2 202 122

## Beschreibung

Die Erfindung bezieht sich auf ein Ausleger-Arbeitsgerät, insbesondere Auslegermähgerät, gemäß dem Oberbegriff der Ansprüche 1 bzw. 8. Auslegermähgeräte sind insbesondere bekannt aus DE-PS 21 59 944.

Gemäß dem Stande der Technik wurden solche Auslegermähgeräte auch bereits mit Nachführvorrichtungen ausgestattet, die beispielsweise als proportional arbeitendes Steuerorgan ein Druckbegrenzungsventil für die Ölzufuhr zum Hubzylinder des Auslegerarmes umfaßten und für eine konstante Auflagekraft des auf der Mähfläche mittels einer Abrollwalze abrollenden Mähkopfes sorgen sollten.

Eine solche Steuerung wurde unter der Bezeichnung DVE (Druckvorgesteuerte Entlastungs-Steuerung) von der Firma Mulag, Bad Peterstal, als Sonderausstattung zu dem Mähgerät nach obiger DE-PS 21 59 944 angeboten.

Durch die WO-A-92/11750, die die Merkmale des Oberbegriffs der Ansprüche 1 und 8 zeigt, ist ebenfalls bereits eine Nachführvorrichtung für Auslege-Arbeitsgeräte bekannt, bei der die Wegsensor-Anordnung für die Abtastung der Senkrecht-Bewegungen des Arbeitskopfes jedoch in Wirkverbindung mit den schwenkbar gelagerten Auflagekufen des Arbeitskopfes stehen.

Der vorliegenden Erfindung liegt die Aufgabe zugrunde, bei einem Ausleger-Arbeitsgerät, bei auftretenden Änderungen des Geländes bei einfachem Aufbau eine genauere selbsttätige Nachführung des Arbeitskopfes und seines Auflagedruckes und somit Beibehaltung konstanter Bearbeitungsverhältnisse zu sorgen.

Diese Aufgabe ist durch die Merkmale des Anspruches 1 bzw. 8 gelöst.

Ein so ausgestaltetes Ausleger-Arbeitsgerät hat den Vorteil, daß unabhängig von unterschiedlichen Fahrgeschwindigkeiten und auch Weiteneinstellungen des Auslegers oder auftretenden Leckverlusten in der Hydraulik eine Einstellung des Arbeitsgerätes immer genau auf die gewünschten Bearbeitungsverhältnisse erfolgt und nicht die Notwendigkeit ständiger manueller Nachstellung besteht. Die getroffene Ausgestaltung sorgt dabei für geringstmögliche Fehler bei der Übertragung der von der Wegsensoranordnung festgestellten Änderungen der Arbeitsbedingungen an die Stelleinrichtung.

Im Falle von Auslegermähgeräten, wie sie beispielsweise vielfach als Böschungsmähgeräte an Straßen im Einsatz sind, kann auf diese Weise immer mit gleichbleibender, boden-schonender Auflagekraft gefahren werden und zwar unabhängig von der jeweiligen Arbeitsgeschwindigkeit und egal, ob der Ausleger auf einen Arbeitsbereich unmittelbar neben dem Trägerfahrzeug oder auf einen größeren Abstand davon eingestellt ist.

Aufgrund der selbsttätigen Anpassung an geänderte Arbeitsbedingungen ohne wesentliche Fehler kann die Arbeitsgeschwindigkeit gesteigert werden, so daß auch die Verkehrsbelastung der Straßen verringert werden kann. Für das Bedienungspersonal ist ermüdungsfreies Arbeiten gewährleistet, und durch Konstanthaltung der Auflagekraft werden im übrigen auch das Auslegersystem und das Fahrzeug geschont.

Die getroffene Anordnung sorgt insbesondere auch für maximalen Abstand der Wegsensoranordnung vom Drehpunkt der Aufhängung der Abrollwalze und sorgt somit für maximalen Meßweg der Wegsensoranordnung und damit größte Feinfühligkeit.

Die Unteransprüche beziehen sich auf vorteilhafte Ausgestaltungen.

Zum Stande der Technik ist auch zu bemerken, daß elektronisch-hydraulische Regelungen auf der Grundlage eines Soll-Ist-Vergleichs an sich bereits bekannt sind und als solche nicht beansprucht werden.

Es folgt die Beschreibung von Ausführungsbeispielen der Erfindung anhand von Zeichnungen.

Fig. 1 zeigt ein als Böschungsmähgerät ausgestaltetes Auslegerarbeitsgerät, welches an ein Straßen-Unterhaltungsfahrzeug angebaut ist;

Fig. 2 zeigt schematisch die Seitenansicht des Mähkopfes des Böschungsmähgerätes aus Fig. 1 mit einer an einer Federstabstahl-Anordnung angeordneten Abrollwalze und induktiven Wegsensoren;

Fig. 3 zeigt schematisch und teilweise fortgebrochen eine Vorderansicht des Mähkopfes mit Abrollwalze;

Fig. 4 zeigt schematisch eine erste Ausführungsform der Schaltungsanordnung der Stelleinrichtung für den Auflagedruck des Mähkopfes;

Fig. 4A zeigt eine der fig. 4 entsprechende zweite Ausführungsform der Schaltungsanordnung mit Einbeziehung eines weiteren Wegsensors, der Änderungen der Schwenkstellung des Auslegers mit dem Mähkopf feststellt.

Fig. 5 zeigt weitere Einzelheiten einer Schaltungsanordnung der Stelleinrichtung für den Auflagedruck des Mähkopfes.

Fig. 5A zeigt weitere Einzelheiten der ergänzten Schaltungsanordnung nach Fig. 4A.

Fig. 6. zeigt schematisch die Draufsicht der Anordnung eines Wegsensors im Drehgestell des Auslegers eines Böschungsmähgerätes.

Fig. 7 zeigt schgematisch-schaubildlich eine Drehgestell-Konstruktion für den Ausleger eines Böschungsmähgerätes mit Anordnung eines Wegsensors.

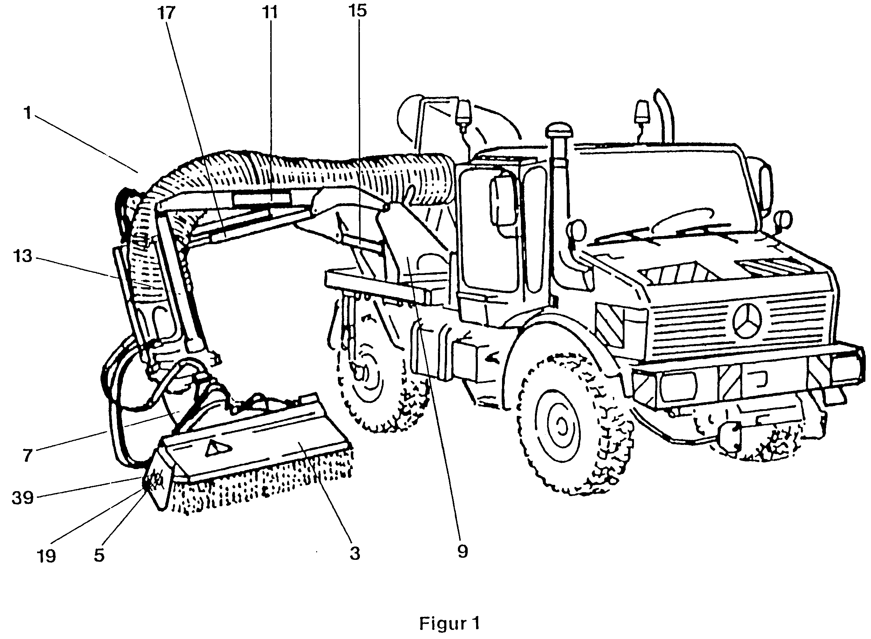

Fig. 1 zeigt ein Straßen-Unterhaltungsfahrzeug mit angebautem Ausleger-Arbeitsgerät in Form eines Böschungs-Mähgerätes. Der Ausleger 1 ist ein Knickarm, der an dem Fahrzeug drehbar und schwenkbar angebaut ist. Der Knickarm trägt an seinem freien Ende als Arbeitsgerät einen Mähkopf mit Mähwerksgehäuse 3. Darin befindet sich eine Schlagmesserwelle mit bodenparalleler Achslage zum Abmähen von Gras beispielsweise an Böschungen. Man sieht am linken Ende des Mähwerksgehäuses 3 ein Achsende 5 der Schlagmesserwelle. Das Mähwerksgehäuse sitzt dreh- und schwenkbar an einem Krümmer 7, der an dem freien Ende des Knickarms angebaut ist und in nicht näher gezeigter Weise auch zum Anschluß eines Saugschlauches dienen kann. Die bisher beschriebene Anordnung entspricht derjenigen, wie sie aus dem Deutschen Patent 21 59 944 bekanntgeworden ist.

Statt des Mähwerksgehäuses 3 kann an dem Knickarm 1 auch ein anderes Ausleger-Arbeitsgerät, beispielsweise ein Unrat-Sammelgerät oder dergleichen angebaut sein, bei dem es auf eine Gleichhaltung des Auflagedruckes des Arbeitsgerätes auf dem bearbeiteten Gelände ankommt. Für sog. Böschungsmähgeräte, welche insbesondere die Randstreifen von Straßen bearbeiten, ist das besonders wichtig.

Der Ausleger 1 ist in Fig. 1 auf seine Arbeitsstellung seitlich vom Fahrzeug abstehend eingestellt. Für den Transport kann der Ausleger in hier nicht näher interessierender Weise nach hinten geschwenkt werden. Der Ausleger hat ein Drehgestell 9, mit dem er über einen Grundrahmen an dem Fahrzeug angebaut ist, einen am Drehgestell 9 angelenkten inneren Auslegerarm 11, und einen äußeren Auslegerarm 13, der das Mähwerksgehäuse 3 trägt. Zwischen dem Drehgestell 9 und dem inneren Auslegerarm 11 ist ein hydraulischer Hubzylinder 15 ) angeordnet, mittels dessen der Ausleger insgesamt angehoben werden kann, und zwischen dem inneren Auslegerarm 11 und dem äußeren Auslegerarm 13 ist ein Knickzylinder 17 angeordnet, mittels dessen die Knickstellung der beiden Auslegerarme zueinander verändert werden kann.

Aufgrund der vorstehend erläuterten und an sich bekannten Anordnung des Auslegers und des daran angebrachten Mähwerksgehäuses kann dieses insbesondere auf verschiedene Neigungsstellungen und Höhenstellungen gegenüber dem bearbeiteten Gelände eingestellt werden. Dabei führt die mittels des Hubzylinders 15 bewirkte Höheneinstellung des Mähwerksgehäuses 3 gegenüber dem Gelände zu einem mehr oder minder großen Auflagedruck, und dessen richtige Bemessung ist wichtig für eine einwandfreie und wirtschaftliche Arbeitsweise des Mähkopfes oder sonstigen Arbeitsgerätes. Der Auflagedruck des Mähkopfes auf dem Gelände wird dabei durch eine wie bekannt am hinteren Ende des Mähwerksgehäuses 3 bodenparallel angeordnete Abrollwalze 19 abgefangen, deren genaue Anordnung und Zusammenwirken mit einer Stelleinrichtung für den Auflagedruck des Mähkopfes im Nachfolgenden genauer beschrieben wird.

Die Möglichkeit einer Nachstellung des Auflagedruckes ist wichtig, weil der Auflagedruck sich ändert, sobald der Mähkopf eine andere Geländeneigung oder Unebenheiten antrifft. Die für einen wirtschaftlichen Betrieb derartiger Auslegermähgeräte notwendigen hohen Arbeitsgeschwindigkeiten lassen dabei eine automatische Nachstellung des Auflagedruckes erwünscht erscheinen, um bestmögliche Arbeitsergebnisse zu erzielen und das Bedienungspersonal zu entlasten.

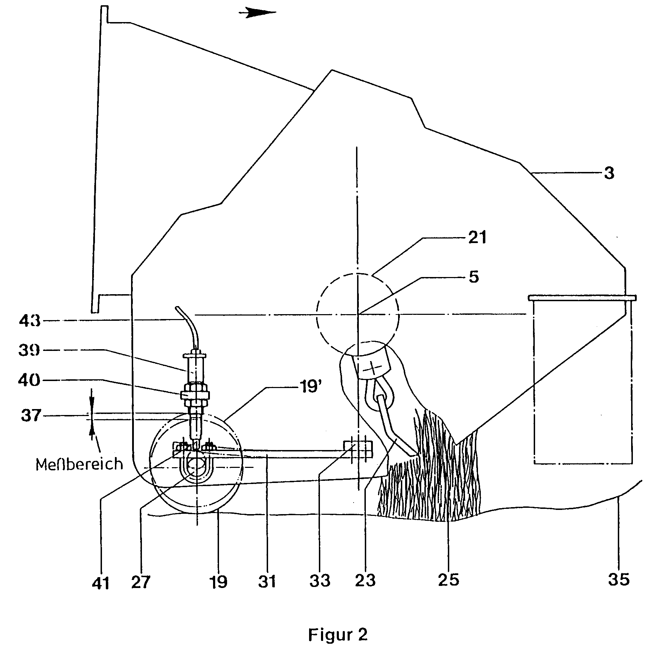

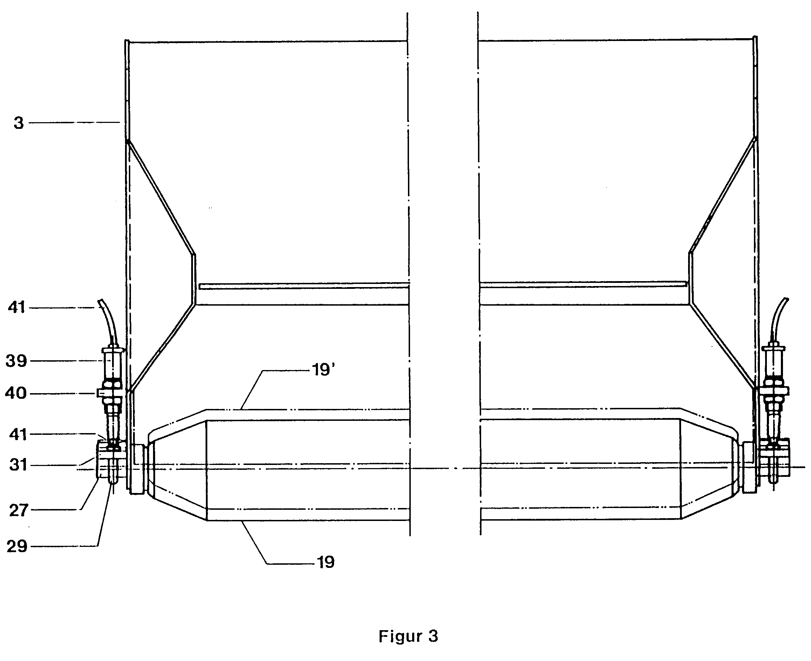

In den Figuren 2 und 3 ist die Anordnung der Abrollwalze 19 in dem Mähwerksgehäuse 3 in Seitenansicht und Vorderansicht detaillierter dargestellt.

Die Achse 5 der Schlagmesserwelle ist in die Seitenansicht eingezeichnet, während die Schlagmesserwelle selbst nur als ein Kreis 21 angedeutet ist. Von den an ihr lose aufgehängten Schlagmessern 23 ist nur ein einziges in der das Gras 25 abmähenden Schnittstellung gezeigt.

Die Abrollwalze 19 befindet sich an dem in Arbeitsrichtung rückwärtigen Ende des Mähwerksgehäuses. Sie ist mit den beiden Enden ihrer Achse 27 beispielsweise mittels U-Schellen an dem freien Ende einer auskragenden Federstabstahl-Anordnung 31 in dem Mähwerksgehäuse aufgehängt. Das Befestigungsende jeder Federstabstahl-Anordnung 31 ist bei 33 schematisch angedeutet und liegt im wesentlichen unterhalb der Achse 5 der Schlagmesserwelle. Wie bei 19' angedeutet, kann die Abrollwalze 19 bei Auftreffen auf Hindernisse und geänderte Geländeneigung (wie bei 35 angedeutet) aufgrund ihrer federnden Aufhängung eine Ausweichbewegung vollführen, und diese Ausweichbewegung wird als Meßbereich 37 für die weiter unten zu beschreibende Stelleinrichtung für den Auflagedruck des Mähkopfes auf dem Gelände genutzt.

Zu diesem Zweck sind an dem Mähwerksgehäuse 3 unmittelbar oberhalb der Enden der Achse 27 der Abrollwalze 19 Wegsensoren 39 angebaut, die mit einem Sensortastkopf 41 an der Aufhängestelle der Abrollwalze in Tastberührung mit dem Federstabstahl 31 stehen. Am Mähwerksgehäuse ist eine Befestigungsplatte 40 für die Wegsensoren 39 angebracht.

Jede Bewegung der Abrollwalze 19 gegenüber dem Mähwerksgehäuse 3 wird somit durch die Wegsensoren 39 erfaßt und kann somit als Ausgangssignal durch eine Leitung 43 an die Stelleinrichtung weitergegeben werden.

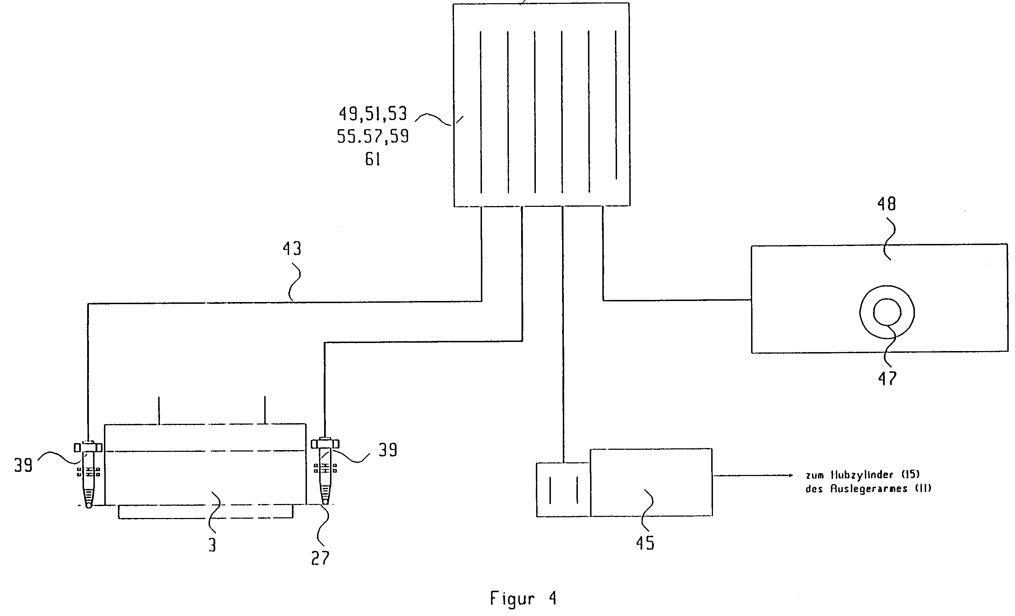

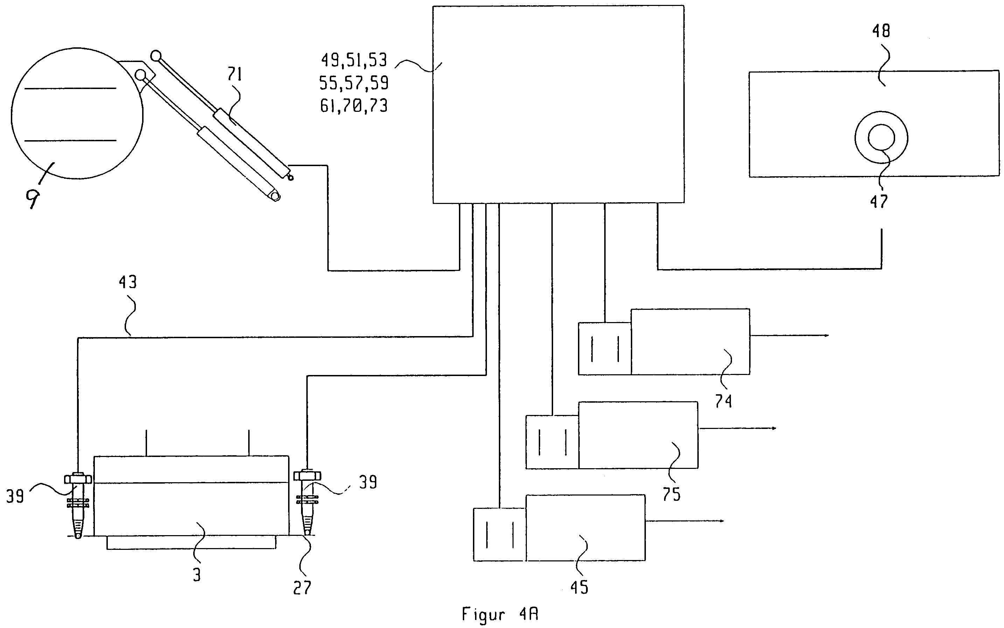

Die Achse 27 der Abrollwalze 19, die in der beschriebenen Weise in dem Mähwerksgehäuse 3 auf- und abbeweglich aufgehängt ist, und die an dem Mähwerksgehäuse 3 befestigten Wegsensoren 39 mit ihrer Anschlußleitung sind auch in Fig.4 gezeigt, die schematisch die Schaltungsanordnung der Stelleinrichtung für den Auflagedruck des Mähkopfes zeigt. In Fig. 4 sieht man auch das proportional steuerbare Druckbegrenzungsventil 45, welches den hydraulischen Druck in dem Hubzylinder 15 der Stelleinrichtung nach Maßgabe erforderlicher Verstellung des Mähwerksgehäuses 3 steuert.

Zu der Schaltungsanordnung der Stelleinrichtung gehören auch ein Bedienungspult 48, das von der Bedienungsperson manuell betätigt werden kann, und eine Vergleichsstelle 49, sowie entsprechende Verbindungsleitungen.

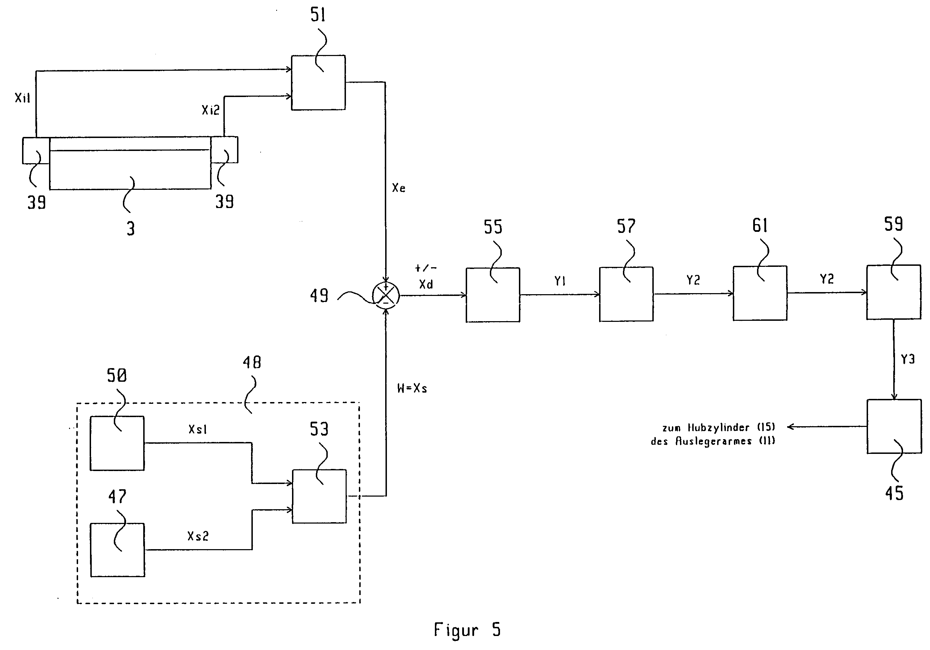

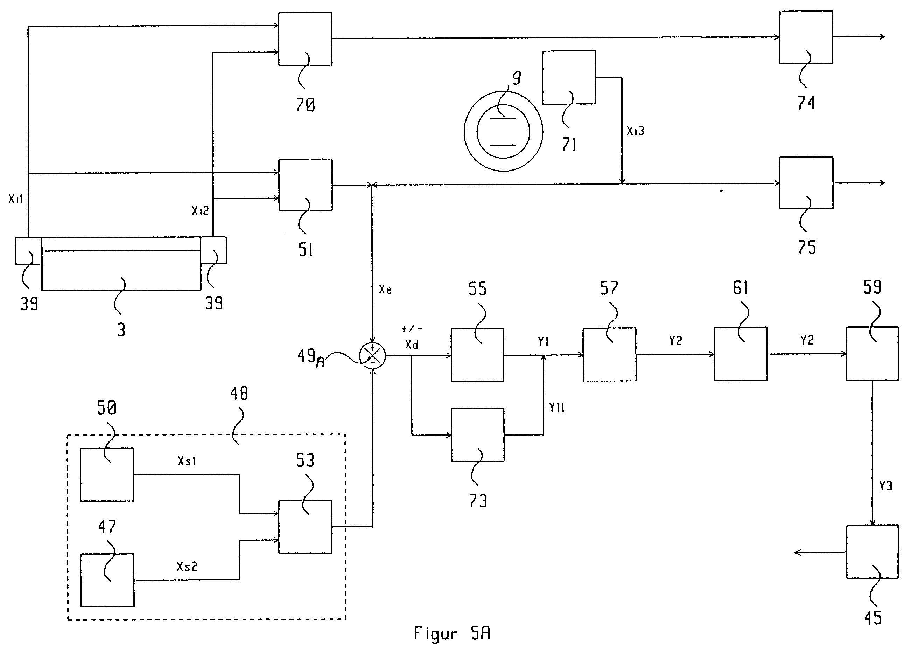

Fig. 5 zeigt weitere Einzelheiten der Schaltungsanordnung mit rein schematischer Andeutung des Mähwerksgehäuses 3 und den Wegsensoren 39.

Im einzelnen sind Aufbau und Arbeitsweise der Schaltungsanordnung der Stelleinrichtung für den Auflagedruck des Mähkopfes gemäß der Ausführungsform der Erfindung nach den Figuren 1- 3 und 4 und 5 wie folgt vorgesehen:

Die Schaltungsanordnung bewirkt eine elektrohydraulische Auslegerregelung. Die Regelung ist allgemein gesprochen bekanntlich ein Vorgang, bei dem die zu regelnde Größe (Regelgröße X) fortlaufend erfaßt, mit einer anderen Größe, der Führungsgröße (W) verglichen und abhängig vom Ergebnis dieses Vergleichs im Sinne einer Angleichung an die Führungsgröße beeinflußt wird. Bei der vorliegenden Erfindung ist in der nachstehend erläuterten Weise die Regelgröße ein Signal, welches von der jeweiligen tatsächlich gemessenen Stellung des Mähwerksgehäuses 3 über dem bearbeiteten Gelände abhängt. Die Führungsgröße entspricht einem eingestellten Sollwert für die Auslegerstellung.

Kennzeichen für die Regelung ist der geschlossene Wirkungsablauf, bei dem die Regelgröße im Wirkungsweg des Regelkreises fortlaufend sich selbst beeinflußt, nämlich im Sinne einer Angleichung der Regelgröße an die Führungsgröße (W).

Damit wird nicht nur die kontinuierliche, sondern auch die abtastende Regelung erfaßt, da ein ständig wiederholtes Abtasten ebenfalls die Kriterien des geschlossenen Wirkungsablaufes erfüllt.

Von den Wegaufnehmern/Sensoren 39 an den beiden Enden des Mähkopfes des Mähwerksgehäuses 3 wird der über die Federkraft der Federstabstahl-Anordnung 31 gelieferte Weg durch die Wegsensoren 39 in ein elektrisches Signal $X_{i1}$, $X_{i2}$ umgewandelt und auf einen der Vergleichsstelle 49 vorgeschalteten Summierer 51 geführt, der die Regelgröße $X_e$ als festgestellten Istwert bildet, dessen Veränderung eine Nachstellung des Auflegers 1 mit dem Mähwerksgehäuse 3 bewirkt.

Eine erste Sollwert-Komponente, die einen am Bedienungspult 48 mittels Stellknopf 50 einstellbaren Grundwert $X_{s1}$ darstellt, und eine Sollwert-Komponente $X_{s2}$ des Sollwertgebers 47 werden ebenfalls auf einen weiteren Summierer 53 geführt, der als Führungsgröße den Sollwert $X_s$ für die Stellung des Auslegers 1 mit dem Mähwerksgehäuse bildet.

Die Regelgröße $X_e$ vom ersten Summierer 51 und Sollwert der Regelgröße $X_s$ vom Summierer 53 werden beide auf die Vergleichsstelle 49 eingegeben. Diese Vergleichsstelle 49 ist eine Subtraktionsstelle. Sie bildet die Differenz zwischen der Regelgröße $X_e$ als Istwert und der Führungsgröße $W = X_s$ als Sollwert. Diese Differenz bildet die Regelabweichung $X_d$.

Die Regelabweichung $X_d$ ist das Ausgangssignal der Vergleichsstelle 49 und wird von einem PI-Regler 55 (Regler für proportional-integrale Regelung) verarbeitet und steht als Stellgröße $Y_1$ am Eingang des Rampenbildners 57 zur Verfügung.

Infolge seines Proportional-Anteils reagiert der PI-Regler auf den Sprung seiner Eingangsgröße, der Regelabweichung $X_d$, mit einem unverzögerten Sprung seiner Ausgangsgröße $Y_1$.

Danach ändert sich die Ausgangsgröße $Y_1$ infolge des Integral-Verhaltens mit konstanter Änderungsgeschwindigkeit.

Der Rampenbildner 57 bildet aus einem sprunghaft ansteigenden Eingangssignal $Y_1$ ein langsam ansteigendes Ausgangssignal $Y_2$, das als Eingangssignal $Y_2$ am Signalumformer 59 in einen proportionalen Strom $Y_3$ umgewandelt und dem proportionalen Druckbegrenzungsventil 45 zugeführt wird.

Mit der Umschalteinheit 61 ist sowohl manueller Betrieb als auch Regelungsbetrieb möglich.

Durch diese Regelung ist es gewährleistet, den Ausleger unabhängig vom Auslenkwinkel des Auslegerarmes den Bodenverhältnissen und der Arbeitsgeschwindigkeit anzupassen und somit mit konstanter Auflagekraft zu mähen.

Die bei der vorliegenden Erfindung verwendeten induktiven Wegsensoren 39 sind im Handel erhältliche Bauteile, wie sie beispielsweise von der Firma Bosch gemäß Katalog 1993, Teile Nr. 0 538 009-131 beziehbar sind. Die dabei angegebene Merkmalsspezifikation ist folgende:

$$U_{sig} = 0,25....0,75 \cdot U_{sup}.$$

- axial beweglicher Tastkopf mit Federvorspannung;
- induktives Wegsensorelement nach dem Differentialdrosselmeßprinzip
- integrierte Elektronik mit Temperaturkompensation;
- Ausgangssignal ratiometrisch und proportional zum Weg;
- Nullpunkt und Empfindlichkeit sind exakt abgeglichen;
- Gehäuse mit Außengewinde M 24 x 1,5 zur Befestigung und Justage.

Geeignete Steuerungsgeräte auf der Grundlage eines Soll-Ist-Vergleichs, mit dem sich die Vergleichsstelle 49, Sollwertgeber 47, 50, und Rampenbildner 57 zur Steuerung des Druckbegrenzungsventiles 45 verwirklichen lassen, sind als Module im Handel erhältlich, beispielsweise die speicher-programmierbare Steuerung der Firma "Inter Control", Nürnberg, mit der Bezeichnung "Digsy plus". Ein zur Zusammenarbeit damit geeignetes proportional arbeitendes Druckbegrenzungsventil wird beispielsweise von der Firma Rexroth, Lohr/Main, angeboten, und zwar mit den technischen Daten: Ölmenge 25l, max. Druck 240 bar und Steuersignal 0-1000mA.

Für eine weitere Vervollkommnung läßt sich die anhand der Figuren 1 bis 4 und 5 beschriebene Stelleinrichtung für den Auflagedruck des Mähkopfes 3 welche auf der Grundlage der seitlich an dem Mähkopf 3 angeordneten Wegsensoren 39 arbeitet, durch eine Sensoranordnung zur Feststellung von Änderungen der Schwenkstellung des den Mähkopf 3 tragenden Auslegers 1 ergänzen.

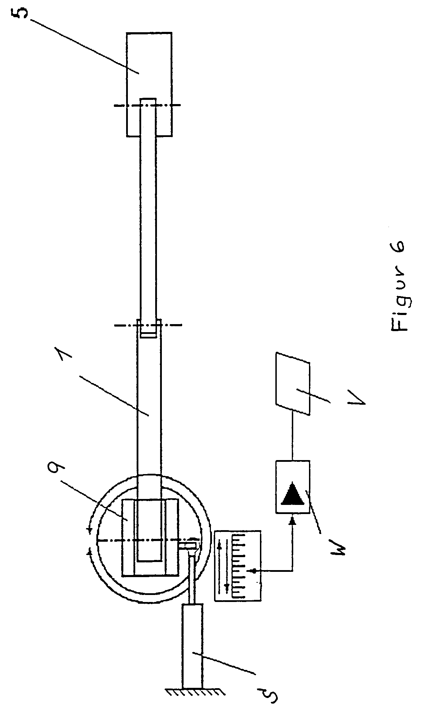

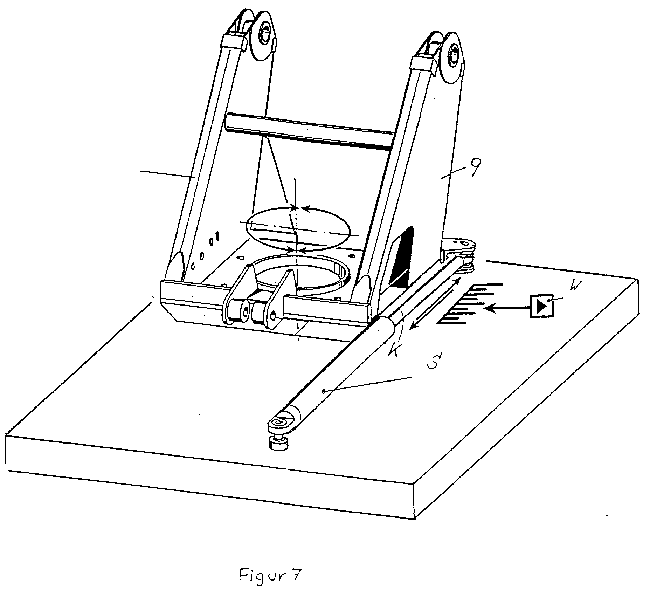

Es ist in diesem Zusammenhang zu erwähnen, daß ein zu hoher Auflagedruck des Mähkopfes auf dem bearbeiteten Gelände sich ja nicht nur in einer Verringerung des Abstandes des Mähkopfes vom Gelände äußert, sondern auch in einem erhöhten Widerstand gegen die Vorwärtsbewegung des Mähkopfes auf dem Gelände. Dieser erhöhte Widerstand gegen die Vorwärtsbewegung des Mähkopfes auf dem Gelände wiederum wird durch den Ausleger 1 auf das Drehgestell 9 und den Schwenkzylinder S des Drehgestells übertragen. Dabei führen der Schwenkzylinder S und seine Kolbenstange eine gewisse Relativ-Bewegung zueinander aus, und es ändert der Ausleger seine normalerweise rechtwinklige Schwenkstellung gegenüber dem Trägerfahrzeug. Der von der Kolbenstange K des Schwenkzylinders S des Drehgestelles 9 ausgeführte Weg kann somit in der in den Figuren 6 und 7 durch die Wegsensor-Anordnung W angedeuteten Weise gemessen und das dabei erzeugte Signal in den Regelvorgang für den richtigen Auflagedruck des Mähkopfes auf dem bearbeiteten Gelände einbezogen werden.

Die Figuren 4A und 5A zeigen eine entsprechend ergänzte Schaltungsanordnung, in welche eine Wegsensoranordnung 71 für Änderungen der Drehstellung des Drehgestelles 9 des Auslegers 1 einbezogen ist.

Die Grundbestandteile der Schaltungsanordnung sind weitgehend ähnlich wie anhand der Figuren 4 und 5 beschrieben und demgemäß sind in den Figuren 4A und 5A auch für übereinstimmende Teile die gleichen Bezugszeichen verwendet.

Die Figur 7 zeigt detaillierter die weitgehend bekannte Konstruktion des Drehgestelles 9 für den Ausleger 1 (Fig. 1). Figur 7 zeigt auch den Schwenkzylinder S, mittels dessen die Schwenkstellung des Drehgestelles 9 veranderbar ist, sowie schematisch die Wegsensor-Anordnung W, welche Änderungen der Stellung der Kolbenstange K des Schwenkzylinders S des Drehgestelles überwacht, wie es auch schematisch in Fig. 6 angedeutet ist. Fig. 6 zeigt auch schematisch die Weiterleitung des von der Wegsensor-Anordnung W abgegebenen Signales an einen Signal-Verarbeitungsteil V der die Signalverarbeitung in der im Einzelnen anhand der Fig.4A und 5A erläuterten Weise vornimmt.

Während eine Wegsensor-Anordnung W zur Feststellung von Änderungen der Schwenkstellung des Drehgestelles 9 vorliegend als Ausführungsbeispiel beschrieben ist, sei darauf verwiesen, daß zur Feststellung von Änderungen der Schwenkstellung des Drehgestelles 9 auch andere Sensoranordnungen eingesetzt werden können. So kann an dem Drehgestell eine Nockenanordnung vorgesehen sein, die mit einer Tastschalter-Anordnung zusammenarbeitet, um bei Abweichungen von einer Soll-Stellung einen Schaltvorgang auszulösen. Es sind auch Hydraulik-Zylinder mit eingebauten Stellungs-Sensoren Winkelgebern oder Drehgebern im Handel, die vorliegend auch zur Veränderung der Schwenkstellung des Drehgestelles und gleichzeitiger Feststellung der jeweiligen Schwenkstellung eingesetzt werden können.

Bei der in den Figuren 4A und 5A schematisch angedeuteten Wegsensor-Anordnung 71 für die Drehstellung (und auch bei der Sensoranordnung 39 am Mähkopf) können beispielsweise Wegsensoren Typ FELIX-S23 der Firma Sensor-Technik Wiedemann GmbH, D 87578 Kaufbeuren Anwendung finden. Diese bekannten Sensoren haben einen linearen Meßweg von 20 mm, eine Spannungsversorgung von 8,5..30 V/DC und ein Ausgangssignal von 4-20mA (3-Leiter-Technik). Für die Sensoranordnung 71 für die Drehstellung können auch die handelsüblichen Pewatron-Wegsensoren können Verwendung finden. Es handelt sich bei den Pewatron-Wegsensoren (Serie PC) um an sich bekannte Linear-Potentiometer.

In Fig.5A ist die zusätzliche Wegsensor-Anordnung 71 als Block mit dem Ausgangssignal Xi3 dargestellt. Das Ausgangssignal Xi3 der Wegsensor-Anordnung 71 wird wie das zuvor beschriebene Signal Xe, welches der Höhenstellung des Mähkopfes entspricht, dem Vergleicher 49A zugeführt und überlagert sich dort mit dem Signal Xe.

Es wurde oben bereits erläutert, daß auch die Änderungen der Schwenkstellung des Auslegers 1 ein Ausmaß für den Auflagedruck des Mähkopfes 3 auf dem Gelände sind und die gleichzeitige Berücksichtigung der die Höhenstellung des Mähkopfes 3 über dem Gelände repräsentierenden Signale Xi1, Xi2 sowie des Signales Xi3 für die Schwenkstellung des Auslegers ergibt eine besonders feinfühlige Regelungsmöglichkeit für den Auflagedruck des Mähkopfes.

Die weitere Verarbeitung des von dem Vergleicher 49A abgegebenen Signales Xd erfolgt entsprechend der obigen Beschreibung.

Alternativ zu dem PI-Regler 55 für eine proportional-integrale Regelung kann auch ein Dreipunkt-Regler 73 Verwendung finden, der jeweils nur bis zu einem vorgegebenen Grenzzustand regelt und nur dann anspricht, wenn von einer oberen oder unteren Begrenzung eines Unempfindlichkeitsbereiches abgewichen wird. Das von dem Dreipunkt-Regler 73 abgegebene Signal Y11 wird dann auch dem Rampenbildner 57 zugeleitet.

Die Figur 5A zeigt zusätzlich zu der Darstellung der Figur 5 auch ein Proportional-Ventil 75, welches ebenfalls das Signal Xi3 der Wegsensor-Anordnung 71 zugeleitet bekommt und nach Feststellung einer Schwenkstellungs-Änderung des Drehgestelles 9 und der nachfolgenden Regelung des Auflagedruckes des Mähkopfes wieder für die Rückführung des Drehgestelles 9 seine Normallage mit rechtwinkliger Einstellung des Auslegers zu dem Trägerfahrzeug sorgt. Zu diesem Zweck ist das Proportional-Ventil 75 an dem Schwenkzylinder S für das Drehgestell 9 angeschlossen.

Im Vergleich zur Figur 5 zeigt die Fig. 5A auch ein weiteres Proportional-Ventil 74, welches in nicht näher dargestellter Weise an einen Schwenkzylinder für den Mähkopf 3 angeschlossen ist, mittels dessen der Mähkopf entsprechend unterschiedlichen seitlichen Geländeneigungen auf unterschiedliche Neigungsstellungen eingestellt werden kann. Das Proportional-Ventil 74 erhält sein Steuerungssignal von einer Auswertlogik 70, welcher auch die Signale Xi1 und Xi2 von den Wegsensoren 39 an den beiden Seiten des Mähkopfes zugeführt werden. Ergibt sich zwischen diesen beiden Signalen ein Ungleichgewicht, weil etwa der Mähkopf 3 auf der einen Seite größeren Abstand vom Gelände als auf der anderen Seite hat, so sorgen die Auswertlogik 70 und das Proportional-Ventil 74 für eine Nachstellung der Neigungsstellung des Mähkopfes 3 für wieder parallele Auflage auf dem bearbeiteten Gelände.

Auch die im Zusammenhang mit der ergänzten Ausführungsform gemäß den Figuren 4A und Fig. 5A verwendeten Elemente des Regelkreises sind handelsüblich, wobei der gewählte Reglertyp sich nach den verwendeten Proportional-Ventilen richtet.

**Patentansprüche**

1. Ausleger-Arbeitsgerät, insbesondere Ausleger-Mähgerät, mit einem Ausleger (1) und einem Arbeitskopf, zur Unterhaltung von Straßennebengelände und dergleichen, mit einer Stelleinrichtung für den Auflagedruck des Arbeitskopfes, insbesondere des Mähkopfes, auf dem bearbeiteten Gelände,

   - wobei das Gehäuse (3) des Arbeitskopfes durch eine im wesentlichen bodenparallele Abrollwalze (19) auf dem Gelände abgestützt ist und
   - zur Beeinflussung des Auflagedruckes der Abrollwalze (19) auf dem Gelände in einer Stelleinrichtung für den Hubzylinder (15) des Auslegers (1) ein proportional arbeitendes Steuerorgan zugeordnet ist, und
   - wobei zur Abtastung von senkrechten Bewegungen der Abrollwalze (19) eine Wegsensorenanordnung (39) mit ihrem Tastkopf (41) in Antriebsverbindung mit der Abrollwalze (19) steht,

   **dadurch gekennzeichnet, daß** die Abrollwalze (19) gegenüber dem Gehäuse (3) des Arbeitskopfes mit ihrer Achse (27) an dem freien Ende einer auskragenden Federstabstahl-Anordnung (31) aufgehängt ist und der Sensor-Tastkopf (41) an der Aufhängungsstelle der Abrollwalze (19) in Tastberührung mit der Federstabstahl-Anordnung (31) steht.

2. Gerät nach Anspruch 1,
   **gekennzeichnet durch**

die Anordnung eines Wegsensors (39) an jedem Ende der Abrollwalze (19).

3. Gerät nach Anspruch 1 oder 2,
   **dadurch gekennzeichnet, daß**
   daß die Wegsensoren induktive Wegsensoren (39) sind, deren Ausgangssignale (xi1), (xi2) einem Summierer (51) zur Mittelwertbildung zugeführt werden.

4. Gerät nach einem der vorhergehenden Ansprüche,
   **dadurch gekennzeichnet, daß**

   - die Stelleinrichtung (15, 45) für den Auflagedruck des Arbeitsgerätes sowohl mit der Wegsensoranordnung (39) als auch mit einem Sollwertgeber (53) verbunden ist und
   - mit einer Vergleichsstelle (49), die die getasteten Istwerte mit dem eingestellten Sollwert vergleicht, ausgerüstet ist, deren Ausgangssignal (Xd) als Regelabweichung einem Proportionalventil bzw. einem proportional arbeitenden Druckbegrenzungsventil (45) des Hubzylinders (15) zur Korrektur der Auslegerstellung nach Maßgabe des Soll/Ist-Vergleiches zugeführt wird.

5. Gerät nach Anspruch 4,
   **dadurch gekennzeichnet, daß**
   die Stelleinrichtung einen geschlossenen Regelkreis mit von der eingestellten Reichweite des Auslegers (1) unabhängiger, selbsttätiger Konstanthaltung des Auflagedruckes des Arbeitsgerätes bildet.

6. Gerät nach Anspruch 5,
   **dadurch gekennzeichnet, daß**
   in dem Regelkreis eine Einrichtung (57) zur Umsetzung einer sprunghaften Regelabweichung (Xd) von dem vorgesehenen Auflagedruck in ein langsam ansteigendes Steuersignal (Y3) für das Proportionalventil bzw. das Druckbegrenzungsventil des Hubzylinders vorgesehen ist.

7. Gerät nach einem der Ansprüche 4 bis 6,
   **dadurch gekennzeichnet, daß**
   die Stelleinrichtung mit elektronischem Soll/Ist-Vergleicher (49) ausgestattet und zur Abgabe von Proportional-Stellimpulsen an das Ölversorgungssystem des hydraulischen Hubzylinders (15) des Auslegers ausgestaltet ist.

8. Ausleger-Arbeitsgerät, insbesondere Ausleger-Mähgerät, mit einem Ausleger (1) und einem Arbeitskopf, zur Unterhaltung von Straßennebengelände und dergleichen, mit einer Stelleinrichtung für den Auflagedruck des Arbeitskopfes, insbesondere des Mähkopfes, auf dem bearbeiteten Gelände,

- wobei das Gehäuse (3) des Arbeitskopfes durch eine im wesentlichen bodenparallele Abrollwalze (19) auf dem Gelände abgestützt ist und
- zur Beeinflussung des Auflagedruckes der Abrollwalze (19) auf dem Gelände in einer Stelleinrichtung für den Hubzylinder (15) des Auslegers (1) ein proportional arbeitendes Steuerorgan zugeordnet ist, und
- wobei zur Abtastung von senkrechten Bewegungen der Anrollwalze (19) eine Wegsensorenanordnung (39) mit ihrem Tastkopf (41) in Antriebsverbindung mit der Abrollwalze (19) steht,

inbesondere nach einem der vorhergehenden Ansprüche
**gekennzeichnet durch**
eine zusätzliche Sensor-Anordnung (71, ) zur Feststellung von Änderungen der Schwenkstellung des den Arbeitskopf tragenden Auslegers (1).

9. Gerät nach Anspruch 8,
**dadurch gekennzeichnet, daß**
die zusätziche Sensor-Anordnung (71) Bewegungen des Schwenkzylinders (S) des Drehgestelles (9) des Auslegers (1) feststellt.

10. Gerät nach einem der Ansprüche 4 bis 9,
**dadurch gekennzeichnet, daß**
das Signal (Xi3) der zusätzlichen Sensor-Anordnung (71) für die Schwenkstellung des Auslegers (1) im Vergleicher (49A) mit dem Signal (Xi1, Xi2) der Wegsensor-Anordnung (39) der Abrollwalze überlagerbar ist.

11. Gerät nach Anspruch 10,
**dadurch gekennzeichnet, daß**
das Ausgangs-Signal (Xd) des Vergleichers (49A) dem Ventil (45) des Hubzylinders (15) des Auslegers über einen nur bei Verlassen eines Unempfindlichkeitsbereiches ansprechenden Dreipunktregler (73) zugeführt wird.

12. Gerät nach Anspruch 10 oder 11,
**dadurch gekennzeichnet, daß**
das Signal (Xi3) der zusätzlichen Sensoranordnung für die Schwenkstellung des Auslegers (1) Anschluß auch an ein Proportional-Ventil (75) für den Schwenkzylinder (S ) des Drehgestelles (9) des Auslegers zu dessen Rückführung in die Normallage hat.

**Claims**

1. A boom-type working implement, in particular a boom-type mowing implement, comprising a boom (1) and a working head, for the maintenance of road verges and the like, comprising a control device for the contact pressure of the working head, In particular the mowing head, on the ground being treated,

- wherein the housing (3) of the working head is supported on the ground by a roller (19) which is substantially parallel to the ground, and
- to influence the contact pressure of the roller (19) on the ground a proportionally operating control member is associated in a control device for the lift cylinder (15) of the boom (1), and
- wherein a travel sensor arrangement (39) is drivingly connected with its sensing head (41) to the roller (19) for sensing vertical movements of the roller (19),

characterised in that the roller (19) is suspended relative to the housing (3) of the working head with its axle (27) at the free end of a cantilever spring bar steel arrangement (31) and the sensor sensing head (41) is in sensing contact with the spring bar steel arrangement (31) at the suspension location of the roller (19).

2. An implement according to claim 1 characterised by the arrangement of a travel sensor (39) at each end of the roller (19).

3. An implement according to claim 1 or claim 2 characterised in that the travel sensors are inductive travel sensors (39) whose output signals (xi1), (xi2) are fed to a summing means (51) for averaging purposes.

4. An implement according to one of the preceding claims characterised in that

- the control device (15, 45) for the contact pressure of the working implement is connected both to the travel sensor arrangement (39) and also to a reference value generator (53), and
- is provided with a comparison means (49) which compares the sensed actual values to the set reference value, whose output signal (Xd) is fed as a regulating deviation to a proportional valve or a proportionally operating pressure-limiting valve (45) of the lift cylinder (15) for correction of the boom position in accordance with the reference/actual comparison.

5. An implement according to claim 4 characterised in that the control device forms a closed regulating circuit with means for automatically keeping the contact pressure of the working implement constant, independently of the set reach of the boom (1).

6. An implement according to claim 5 characterised in that provided in the regulating circuit is a device (57) for converting a sharp regulating deviation (Xd) from the prescribed contact pressure into a slowly rising control signal (Y3) for the proportional valve or the pressure-limiting valve of the lift cylinder.

7. An implement according to one of claims 4 to 6 characterised in that the control device is provided with an electronic reference/actual comparison means (49) and is adapted to output proportional control pulses to the oil supply system of the hydraulic lift cylinder (15) of the boom.

8. A boom-type working implement, in particular a boom-type mowing implement, comprising a boom (1) and a working head, for the maintenance of road verges and the like, comprising a control device for the contact pressure of the working head, in particular the mowing head, on the ground being treated,

 - wherein the housing (3) of the working head is supported on the ground by a roller (19) which is substantially parallel to the ground, and
 - to influence the contact pressure of the roller (19) on the ground a proportionally operating control member is associated in a control device for the lift cylinder (15) of the boom (1), and
 - wherein a travel sensor arrangement (39) is drivingly connected with its sensing head (41) to the roller (19) for sensing vertical movements of the roller (19),

 in particular according to one of the preceding claims,
 characterised by an additional sensor arrangement (71) for detecting changes in the pivotal position of the boom (1) carrying the working head.

9. An implement according to claim 8 characterised in that the additional sensor arrangement (71) detects movements of the pivoting cylinder (S) of the rotary mounting (9) of the boom (1).

10. An implement according to one of claims 4 to 9 characterised in that the signal (Xi3) of the additional sensor arrangement (71) for the pivotal position of the boom (1) can be superimposed in the comparison means (49A) with the signal (Xi1, Xi2) of the travel sensor arrangement (39) of the roller.

11. An implement according to claim 10 characterised in that the output signal (Xd) of the comparison means (49A) is passed to the valve (45) of the lift cylinder (15) of the boom by way of a three-point regulator (73) which is responsive only in the event of departure from an insensitivity range.

12. An implement according to claim 10 or claim 11 characterised in that the signal (Xi3) of the additional sensor arrangement for the pivotal position of the boom (1) is also connected to a proportional valve (75) for the pivotal cylinder (S) of the rotary mounting (9) of the boom for the return thereof to the normal position.

**Revendications**

1. Appareil de traitement, notamment appareil de fauchage à bras porteur, comportant un bras porteur (1) et une tête de traitement pour l'entretien de bords de route et similaires, un dispositif de réglage pour la pression d'appui de la tête de traitement, notamment de la tête de fauchage sur le sol traité,

 - le carter (3) de la tête de traitement prenant appui sur le sol au moyen d'un rouleau (19) d'appui sensiblement parallèle au sol,
 - un organe de commande à action proportionnelle étant prévu dans un dispositif de réglage pour le vérin (15) du bras porteur (1) aux fins d'agir sur la pression d'appui du rouleau (19) sur le sol et,
 - un agencement de capteurs de déplacement (39) avec une liaison active entre la tête (41) de palpage et le rouleau (19) d'appui, aux fins de palper les déplacements verticaux du rouleau (19) d'appui,

 caractérisé par le fait que le rouleau (19) d'appui est suspendu par son axe (27) à l'extrémité libre d'un agencement (31) de barres élastiques en acier et que la tête (41) de palpage du capteur est en contact de palpage avec l'agencement (31) de barres élastiques en acier, au niveau du point de suspension du rouleau (19) d'appui.

2. Appareil de traitement selon la revendication 1, caractérisé par l'agencement d'un capteur de déplacement (39) à chaque extrémité du rouleau (19) d'appui.

3. Appareil de traitement selon la revendication 1 ou 2, caractérisé par le fait que les capteurs de déplacement sont des capteurs (39) inductifs dont les signaux (xi1, xi2) de sortie sont envoyés à un additionneur (51) aux fins de former la valeur moyenne.

4. Appareil de traitement selon l'une des revendications précédentes, caractérisé par le fait que

 - le dispositif (15, 45) de réglage de la pression d'appui de l'appareil de traitement est relié à la fois à l'agencement (39) de capteurs de déplacement et à un transmetteur (53) de valeur de consigne et
 - est pourvu d'un élément comparateur (49) qui compare les valeurs réelles palpées à la valeur de consigne réglée et dont le signal de sortie (Xd) est envoyé en tant qu'écart de réglage à une valve proportionnelle ou à un limiteur de pression (45) à action proportionnelle du vérin (15) à des fins de correction de la position du bras porteur en fonction de la comparaison valeur de consigne/valeur réelle.

5. Appareil de traitement selon la revendication 1, caractérisé par le fait que le dispositif de réglage forme un circuit de régulation fermé, avec maintien automatique à une valeur constante de la pression d'appui de l'appareil de traitement, indépendamment de la portée réglée du bras porteur (1).

6. Appareil de traitement selon la revendication 5, caractérisé par le fait qu'il est prévu, dans le circuit de régulation, un dispositif (57) pour transformer un écart de réglage (Xd) brutal par rapport à la pression d'appui prévue en un signal de commande (Y3) à progression lente pour la valve proportionnelle ou pour le limiteur de pression du vérin.

7. Appareil de traitement selon l'une des revendications 4 à 6, caractérisé par le fait que le dispositif de réglage est pourvu d'un comparateur (49) valeur de consigne/valeur réelle électronique et est agencé pour délivrer des impulsions de réglage proportionnelles au système d'alimentation en huile du vérin (15) du bras porteur.

8. Appareil de traitement, notamment appareil de fauchage à bras porteur, comportant un bras porteur (1) et une tête de traitement pour l'entretien des bords de routes et analogues, un dispositif de réglage pour la pression d'appui de la tête de travail, notamment de la tête de fauchage, sur le sol à traiter,

- le carter (3) de la tête de traitement prenant appui sur le sol au moyen d'un rouleau (19) d'appui sensiblement parallèle au sol,
- un organe de commande à action proportionnelle étant prévu dans un dispositif de réglage pour le vérin (15) du bras porteur (1), aux fins d'agir sur la pression d'appui du rouleau (19) sur le sol et,
- un agencement de capteurs de déplacement (39) avec une liaison active entre la tête (41) de palpage et le rouleau (19) d'appui, aux fins de palper les déplacements verticaux de celui-ci (19),

en particulier selon l'une des revendications précédentes,
caractérisé par un agencement (71) de capteur supplémentaire pour détecter les variations de la position angulaire du bras (1) portant la tête de traitement.

9. Appareil de traitement selon la revendication 8, caractérisé par le fait que l'agencement (71) de capteur supplémentaire détecte des mouvements du vérin (S) de pivotement du châssis (9) pivotant du bras (1).

10. Appareil de traitement selon l'une des revendications 4 à 9, caractérisé par le fait que le signal (Xi3) de l'agencement (71) de capteur supplémentaire pour la position angulaire du bras porteur (1) peut être combiné dans le comparateur (49A) au signal (Xi1, Xi2) de l'agencement (39) de capteurs de déplacement du rouleau d'appui.

11. Appareil de traitement selon la revendication 8, caractérisé par le fait que le signal de sortie (Xd) du comparateur (49A) est envoyé à la valve (45) du vérin (15) du bras porteur par l'intermédiaire d'un régulateur trois points (73) qui ne réagit que lorsqu'on quittte une zone de non-sensibilité.

12. Appareil de traitement selon la revendication 10 ou 11, caractérisé par le fait que le signal (Xi3) de l'agencement de capteur supplémentaire pour la position angulaire du bras porteur (1) est également envoyé à une valve (75) proportionnelle pour le vérin de pivotement (S) du châssis (9) pivotant du bras porteur, aux fins de ramener celui-ci dans sa position normale.

Figur 1

Figur 2

Figur 3

Figur 4

Figur 4A

Figur 5

zum Hubzylinder (15)
des Auslegerarmes (11)

Figur 5A

EP 0 664 076 B1

Figur 6

Figur 7